Europäisches Patentamt

(19) European Patent Office

Office européen des brevets

(11) Veröffentlichungsnummer: **0 194 340**
**B1**

(12) **EUROPÄISCHE PATENTSCHRIFT**

(45) Veröffentlichungstag der Patentschrifft:
28.02.90

(51) Int. Cl. $^5$: **F 16 J 15/54**

(21) Anmeldenummer: 85112488.3

(22) Anmeldetag: 03.10.85

(54) Anordnung einer Wellendichtung in einem Kurbelgehäuse einer Brennkraftmaschine.

(30) Priorität: 05.10.84 DE 3436533

(43) Veröffentlichungstag der Anmeldung:
17.09.86 Patentblatt 86/38

(45) Bekanntmachung des Hinweises auf die Patenterteilung:
28.02.90 Patentblatt 90/09

(84) Bennante Vertragsstaaten:
CH DE FR GB IT LI NL

(56) Entgegenhaltungen:
CH-A-448 647
DD-A-14 251
DD-A-26 916
DE-A-1 804 557
DE-A-1 902 491
US-A-4 177 997

SOVIET INVENTIONS ILLUSTRATED, Sektion Mechanik, Woche E05, 17. März 1982, Zusammenfassungsnr. B1628 Q65, Derwent Publications Ltd., London, GB; & SU - A - 823 722 (GAFT YAZ) 25.04.1981

(73) Patentinhaber: Klöckner-Humboldt-Deutz Aktiengesellschaft
Deutz-Mülheimer-Strasse 111 Postfach 80 05 09
D-5000 Köln 80 (DE)

(72) Erfinder: Toonen, Jan
Dörrenberger Weg 28
D-5250 Engelskirchen (DE)

## Beschreibung

Die Erfindung bezieht sich auf eine Anordnung einer Wellendichtung der im Oberbegriff des Anspruchs 1 genannten Art.

Bei einer bekannten Vorrichtung dieser Art (Hermann Mettig, "Die Konstruktion schnellaufender Verbrennungsmotoren", Seite 483) ist an den Austrittsseiten der Kurbelwelle aus dem Kurbelgehäuse am jeweiligen Wellenzapfen der Kurbelwelle jeweils ein Radialdichtring, einerseits in einem mit dem Kurbelgehäuse verbundenen Flanschdeckel und andererseits unmittelbar im Kurbelgehäuse, angeordnet. Aufgrund der am Wellenzapfen auftretenen Radialbewegungen, die selbst bei geringstmöglichem Radialspiel im Grundlager auftreten, ermüdet bzw. verschleißt der verwendete Radialdichtring bereits nach relativ kurze Betriebszeit der Brennkraftmaschine. Wird anstelle eines Dichtlippen aufweisenden Radialdichtringes eine Labyrinthdichtung verwendet, so ist zwischen der Dichtung und dem Wellenzapfen ein Spiel vorzusehen, das zumindest dem Radialspiel im Grundlager entspricht. Über diesen radialen Spalt tritt zwangsläufig Schmieröl aus dem Kurbelgehäuse aus.

Aus der CH-A-4 448 647 geht eine Wellenabdichtung als bekannt voraus, die zwei in ein Gehäuse eingesetzte flexible O-Ringe vorsieht, wobei der Zwischenraum zwischen den O-Ringen mit einem separaten Schmiermittel gefüllt ist. Das Schmiermittel hat die Aufgabe die O-Dichtungsringe zu befeuchten und damit für eine Verschleißminderung zu sorgen sowie weiter die Abdichtung zwischen Welle und Lagergehäuse zu verbessern durch ein Anschmiegen der O-Ringe auf die Welle mit Hilfe des unter Druck stehenden Schmiermittels. Bei der aus der CH-A bekannten Wellenabdichtung ist weiter vorgesehen, daß der Schmiermitteldruck über den außenseitig an den O-Ringen anstehenden Druck steht. Diese Abdichtung verlangt eine völlig konzentrische Anordnung der O-Ringe um die Welle und kann folglich nicht eingesetzt werden für die Kurbelwellenabdichtung an den Austrittsseiten im Kurbelgehäuse, aufgrund der am Wellenzapfen auftretenden Radialbewegungen.

Als weitere Stand der Technik zeigt die DD-A-14 251 eine Lagerabdichtung für Gleitlagerungen, wobei der Dichtungsring auf einer umlaufenden Welle aufgeschoben und in einem Ring eingesetzt ist, welcher in einer Nut eines Lagerkörpers geführt ist und eine Verdrehsicherung aufweist. Durch die Führung des den Dichtungsring aufnehmenden Ringes wird auch eine Wellenabdichtung sichergestellt für eine sich in radialer Richtung begrenzt bewegende Wellle. Diese Dichtung ist lediglich für langsam umlaufende Wellen geeignet, da das breitflächig auf der Welle aufsitzende Dichtungsmittel für heute an Brennkraftmaschinen üblichen Drehzahlen einem zu hohen Verschleiß unterworfen wäre.

Der Erfindung liegt die Aufgabe zugrunde, die vorgenannten Schwierigkeiten zu vermeiden und somit eine Dichtung einer Kurbelwelle zu schaffen, die äußerst wirksam ist, eine hohe Lebensdauer hat und ohne großen baulichen Aufwand in der Brennkraftmaschine anzubringen ist.

Diese Aufgabe wird an einer Wellendichtung der in Rede stehenden Gattung durch die im Kennzeichen des Anspruchs 1 aufgeführten Merkmale gelöst. Danach ist die Wellendichtung in einem ringförmigen Lagerelement angeordnet, das dem Wellenzapfen eng umschließt. Der Spalt zwischen dem Lagerelement und dem Wellenzapfen kann dabei eine Abmessung haben, die etwa 10 bis 20 % des im Grundlager auftretenden Lagerspiels beträgt. Dieses geringe Spiel kann am Lagerelement gewählt werden, da es im Gegensatz zum Grundlager keine Last übernehmen muß. Weiterhin ist das Lagerelement im Flanschteil oder Kurbelgehäuse schwimmend gelagert und kann daher den radialen Bewegungen des Wellenzapfens derart folgen, daß an einer als Lippendichtung ausgebildeten Wellendichtung stets eine gleichmäßige Belastung an der bzw. den Dichtlippen auftritt. Bei einer als Labyrinthdichtung ausgebildeten Wellendichtung wird durch die schwimmende Lagerung des Lagerelements ein stets gleichbleibendes, relativ geringes Spiel zwischen dem Labyrinth und dem Wellenzapfen eingehalten.

In weiterer Ausgestaltung der Erfindung wird vorgeschlagen, daß die Lagerung des Lagerelements dem Hauptlager benachbart ist, und daß sich zum Äußeren des Kurbelgehäuses hin an die Lagerung ein ringförmiger Ölsammelraum und die Wellendichtung anschließen. Aufgrund des geringen Radialspiels übernimmt die Lagerung dabei in gewisser Weise eine Dichtfunktion, und das durch die Lager hindurchtretende Schmieröl wird in dem ringförmigen Ölsammelraum durch die anschließende Wellendichtung gesammelt und kann von dort aus wieder in das Kurbelgehäuse abgeführt werden. Bei Verwendung einer Labyrinthdichtung können innerhalb des Labyrinths mehrere Sammelbohrungen angeordnet sein, die an den ringförmigen Ölsammelraum angeschlossen sind.

In vorteilhafter Weise kann der Ölsammelraum über zumindest eine Radialbohrung mit einem das Lagerelement radial umschließenden hydraulischen Dämpfungsraum verbunden sein. Das in dem Ölsammelraum aufgefangene Schmieröl gelangt über diese Radialbohrungen in den Dämpfungsraum und kann diesen wiederum über weitere in das Kurbelgehäuse gerichtete Abströmöffnungen verlassen.

Weiterhin ist vorgesehen, daß der hydraulische Dämpfungsraum bzw. die Aufnahme des Lagerelements im Kurbelgehäuse oder Flanschdeckel durch eine Halbschalenbauweise mit nutförmigen Ausnehmungen gebildet ist. Auf diese Weise läßt sich ohne besonderen fertigungstechnischen Aufwand eine Aufnahme bzw. ein hydraulischer Dämpfungsraum zur Anordnung eines ringförmigen Lagerelements für eine Wellendichtung schaffen. Alternativ dazu besteht aber auch die Möglichkeit, im Flanschdeckel bzw. in der Wand des Kurbelgehäuses einen L-förmigen Ring einzuschrumpfen, der dann gemeinsam mit dem ihn haltenden Bauteil eine Aufnahme bzw. einen Dämpfungsraum bildet.

Weiterhin kann das Tragelement über axiale Stifte oder Führungen in seinen seitlichen Anlageflächen am Flanschdeckel oder am Kurbelgehäuse geführt sein. Diese Führungen bzw. Stifte sollen radiale Bewegungen des Tragelements zulassen, während ein Umlaufen des Lagerelements mit dem Wellenzapfen zu verhindern ist.

Zur weiteren Erläuterung der Erfindung wird auf die Zeichnung verwiesen, in der zwei Ausführungsbeispiele vereinfacht dargestellt sind. Es zeigen:

Fig. 1    einen Teillängsschnitt durch eine Abdichtung zwischen einem Flanschdeckel und einem Wellenzapfen einer Kurbelwelle, bei der die Wellendichtung als Radialdichtring ausgebildet ist.

Fig. 2    einen Teillängsschnitt durch eine Abdichtung zwischen einem Flanschdeckel und einem Wellenzapfen einer Kurbelwelle, bei der ein Lagerelement mit einer Labyrinthdichtung vorgesehen ist.

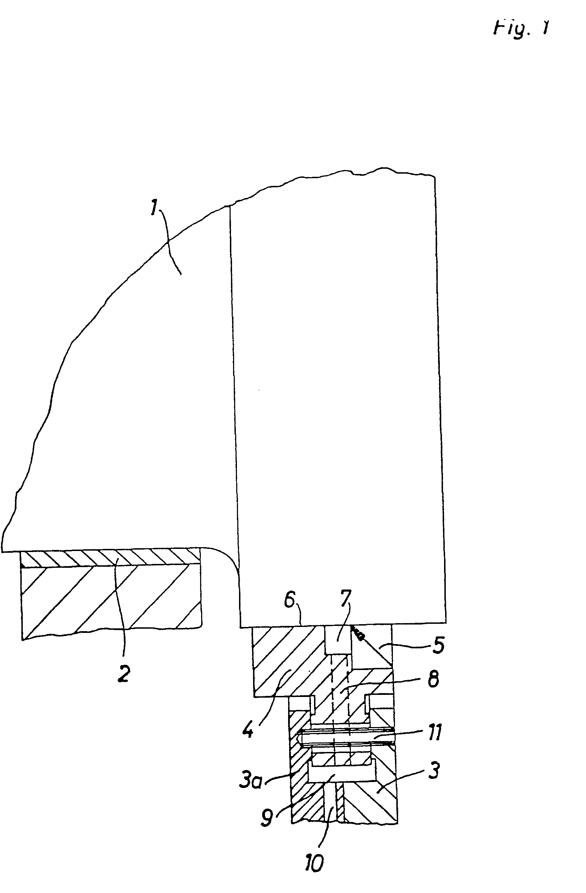

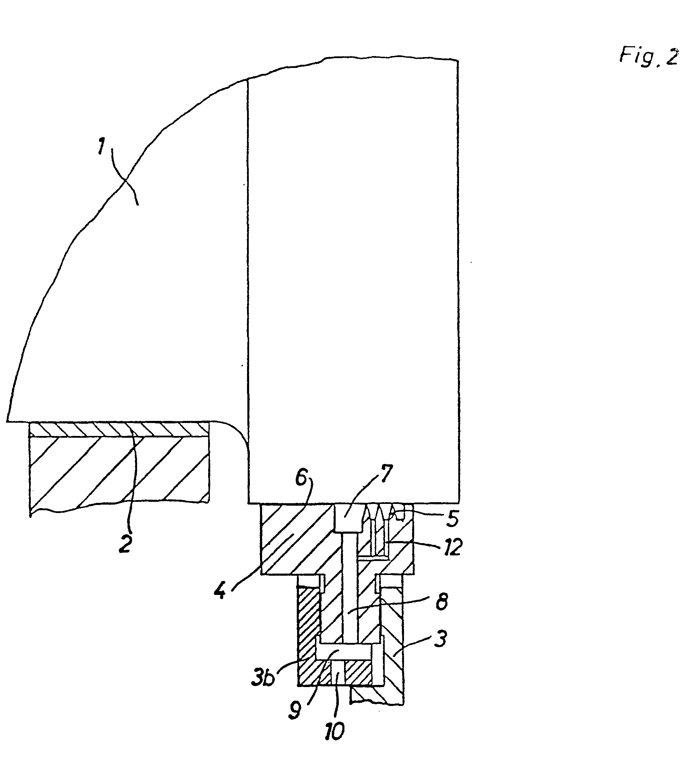

In den Fig. 1 und 2 ist, soweit dargestellt, mit 1 eine Kurbelwelle bezeichnet, die in einem Hauptlager 2 eines nicht näher dargestellten Kurbelgehäuses drehbar gelagert ist. Die Kurbelwelle 1 tritt dabei in üblicher Weise stirnseitig aus dem Kurbelgehäuse aus und kann - ebenfalls nicht dargestellt - einerseits mit einer Riemenscheibe zum Antrieb von Hilfsgeräten und andererseits mit einer Schwungmasse drehfest verbunden sein. Jeder dieser Austritte der Kurbelwelle 1 aus dem Kurbelgehäuse ist derart abzudichten, daß das im Kurbelgehäuse vorhandene Schmieröl bzw. der entstehende Schmierölnebel nicht austreten kann. Wie weiterhin den Fig. 1 und 2 zu entnehmen ist, dient ein Flanschdeckel 3 zum Verschließen der Austrittsöffnung für die Kurbelwelle 1 im Kurbelgehäuse, wobei dieser Flanschdeckel 3 ein Lagerelement 4 aufnimmt. Dieses Lagerelement 4 trägt eine Wellendichtung 5 und ist über ein Lager 6 mit geringem Radialspiel auf dem Wellenzapfen der Kurbelwelle 1 gelagert. Andererseits ist das Lagerelement im Flanschdeckel 3 schwimmend angeordnet, d.h. es kann im Lagerdeckel 3 gedämpfte Radialbewegungen vollführen. Zwischen dem Lager 6 und der Wellendichtung 5 ist ein als Nut ausgebildeter Ölsammelraum 7 vorgesehen, der über Radialbohrungen 8 mit einer hydraulischen Dämpfungsraum 9 im Flanschdeckel 3 in Verbindung steht. Von diesem Dämpfungsraum 9 aus führen wiederum Abströmöffnungen 10 in das Innere des Kurbelgehäuses.

Bei dem Ausgestaltungsbeispiel gemäß der Fig. 1 ist die Wellendichtung 5 als Radialdichtring ausgebildet. Weiterhin sind die Aufnahme des Lagerelements und der Dämpfungsraum 9 durch eine Halbschalenbauweise des Flanschdeckels 3 hergestellt. Die Halbschalen 3 und 3a weisen nutartige Vertiefungen auf, so daß durch Aneinanderfügen der Halbschalen 3 und 3a der Dämpfungsraum 9 gebildet wird. In der inneren Halbschale 3a sind außerdem die in das Kurbelgehäuseinnere gerichteten Austrittsöffnungen 10 vorgesehen. Das Lagerelement 4 ist mittels mehrere am Umfang verteilter Stifte 11 derart am Flanschdeckel 3 bzw. an der Innenschale 3a geführt, daß Radialbewegungen ermöglicht werden, jedoch ein Umlaufen des Lagerelements 4 mit dem Wellenzapfen verhindert wird.

Das Ausgestaltungsbeispiel nach Fig. 2 unterscheidet sich von dem Ausgestaltungsbeispiel nach Fig. 1 dadurch, daß als Wellendichtung eine Labyrinthdichtung vorgesehen ist, wobei aus dem Bereiche der Dichtungslamellen Rücklaufbohrungen 12 in die Radialbohrung 8 geführt sind. Der Dämpfungsraum 9 bzw. die Aufnahme für das Lagerelement 4 wird außerdem durch einen L-förmigen Ring 3b gebildet, der in eine Nut des Flanschdeckels 3 eingeschrumpft ist.

## Patentansprüche

1. Anordnung einer Wellendichtung (5) in einem Kurbelgehäuse einer Brennkraftmaschine oder einem mit diesem verbundenen Flanschdeckel (3) zur Abdichtung des Kurbelgehäuses an einem Wellenzapfen einer Kurbelwelle (1), dadurch gekennzeichnet, daß die Wellendichtung (5) in einem ringförmigen Lagerelement (4) angeordnet ist bzw. Bestandteil desselben ist und im Kurbelgehäuse oder Flanschdeckel (3) radial schwimmend gelagert ist und zu dem Wellenzapfen ein Radialspiel aufweist wobei das Radialspiel etwa 10 bis 20 % des Lagerspiels eines benachbarten, als Gleitlager ausgebildeten Hauptlagers (2) der Kurbelwelle (1) beträgt.

2. Anordnung einer Wellendichtung nach Anspruch 1, dadurch gekennzeichnet, daß die Lagerung (6) des Lagerelements (4) dem Hauptlager (2) benachbart ist und daß sich zum Äußeren des Kurbelgehäuses hin an die Lagerung (6) ein ringförmiger Ölsammelraum (7) und die Wellendichtung (5) anschließen.

3. Anordnung einer Wellendichtung nach einem der vorhergehenden Ansprüche, dadurch gekennzeichnet, daß der Ölsammelraum (7) über zumindest eine Radialbohrung (8) mit einem das Lagerelement (4) radial umschließenden hydraulischen Dämpfungsraum (9) verbunden ist.

4. Anordnung einer Wellendichtung nach einem der vorhergebenden Ansprüche, dadurch gekennzeichnet, daß der hydraulische Dämpfungsraum bzw. die Aufnahme für das Lagerelement (4) im Kurbelgehäuse oder im Flanschdeckel (3) durch eine Halbschalenbauweise (3, 3a) desselben mit nutförmigen Ausnehmungen in diesem Bereich gebildet ist.

5. Anordnung einer Wellendichtung nach einem der Ansprüche 1 bis 3, dadurch gekennzeichnet,

daß der Dämpfungsraum (9) bzw. die Aufnahme für das Lagerelement (4) im Kurbelgehäuse oder im Flanschdeckel (3) durch einen in das Kurbelgehäuse oder den Flanschdeckel eingeschrumpften L-förmigen Ring (3b) hergestellt ist.

6. Anordnung einer Wellendichtung nach einem der vorhergehenden Ansprüche, dadurch gekennzeichnet, daß das Lagerelement (4) im Kurbelgehäuse bzw. Flanschdeckel (3) über axiale Stifte (11) oder über Führungen in seinen seitlichen Anlageflächen derart geführt ist, daß ein Umlaufen desselben mit dem Wellenzapfen der Kurbelwelle (1) verhindert wird.

7. Anordnung einer Wellendichtung nach einem der Ansprüche 1 bis 5, dadurch gekennzeichnet, daß bei Verwendung einer als Labyrinthdichtung ausgebildeten Wellendichtung (5) Rücklaufbohrungen (12) aus dem Bereich zwischen den Dichtlamellen an die Radialbohrungen (8) angeschlossen sind.

## Claims

1. A shaft seal (5) arrangement in a crankcase of an internal-combustion engine or a flanged cover (3) connected thereto for sealing the crankcase on a journal of a crankshaft (1), characterised in that the shaft seal (5) is disposed in an annular bearing element (4) or component thereof and is mounted in radial floating manner in the crankcase or flanged cover (3) and has a radial clearance relative to the crankshaft journal, the radial clearance being about 10 to 20 % of the clearance of an adjacent sliding bearing constituting the main bearing (2) of the crankshaft.

2. A shaft seal arrangement according to claim 1, characterised in that the mounting (6) of the bearing element (4) is near the main bearing (2) and an annular oil-collecting chamber (7) and the shaft seal (5) are adjacent one another alongside the bearing (6) and towards the exterior of the crankcase.

3. A shaft seal arrangement according to one of the preceding claims, characterised in that the oilcollecting chamber (7) is connected by at least one radial bore (8) to a hydraulic damping chamber (9) radially surrounding the bearing element (4).

4. A shaft seal arrangement according to any of the preceding claims, characterised in that the hydraulic damping chamber or the holder for the bearing element (4) in the crankcase or in the flanged cover (3) is formed by a semi-monocoque construction (3, 3a) with groove-like recesses in this region.

5. A shaft seal arrangement according to any of claims 1 to 3, characterised in that the damping chamber (9) or the holder for the bearing element (4) in the crankcase or the flanged cover (3) is formed by an L-shaped ring (3b) shrunk on to the crankcase or the flanged cover.

6. A shaft seal arrangement according to any of the preceding claims, characterised in that the bearing element (4) in the crankcase or the flanged cover (3) is guided on axial pins (11) or on guides in its lateral bearing surfaces so as to prevent it rotating with the journal of the crankshaft (1).

7. A shaft seal arrangement according to any of claims 1 to 5, characterised in that,when the shaft seal (5) is in the form of a labyrinth seal, return bores (12) from the region between the sealing discs are connected to the radial bores (8).

## Revendications

1. Arrangement d'un joint d'arbre (5) dans un bloc moteur de moteur à combustion interne ou dans un couvercle à bride qui lui est relié (3) pour rendre étanche le bloc moteur au niveau d'un tourillon d'arbre d'un vilebrequin (1), caractérisé en ce que le joint d'arbre (5) est placé dans un élément de palier (4) annulaire, ou bien dans la pièce principale de celui-ci, et est logé en flottement radial dans le bloc moteur ou dans le couvercle à bride (3) et présente un jeu radial avec le tourillon d'arbre, le jeu radial représentant environ 10 à 20 % du jeu de palier d'un palier principal voisin (2), exécuté en palier lisse du vilebrequin (1).

2. Arrangement d'un joint d'arbre selon la revendication 1, caractérisé en ce que le palier (6) de l'élément de palier (4) du palier principal est voisin et que se raccordent à l'extrémité du bloc moteur au niveau du palier (6) une chambre de retenue d'huile (7) et le joint d'arbre (5).

3. Arrangement d'un joint d'arbre selon l'une des revendications précédentes, caractérisé en ce que la chambre de retenue d'huile (7) est reliée par au moins un trou radial (8) à une chambre d'amortissement (9) hydraulique entourant radialement l'élément de palier (4).

4. Arrangement d'un joint d'arbre selon l'une des revendications précédentes, caractérisé en ce que la chambre d'amortissement hydraulique ou bien l'évidement pour l'élément de palier (4) est exécuté dans le bloc moteur ou dans le couvercle à bride (3) en construction en demi-coquille (3, 3a) avec des évidements en forme de rainure dans ce domaine.

5. Arrangement d'un joint d'arbre selon l'une des revendications 1 à 3, caractérisé en ce que la chambre d'amortissement (9) ou bien l'évidement pour l'élément de palier (4) dans le bloc moteur ou dans le couvercle à bride (3) est réalisé par un anneau en L (3b) logé dans le couvercle à bride ou dans le bloc moteur.

6. Arrangement d'un joint d'arbre selon l'une des revendications précédentes, caractérisé en ce que l'élémente de palier (4) est guidé au niveau de ses surfaces d'appui latérales dans le bloc moteur ou dans le couvercle à bride par des tiges axiales (11) ou par des guidages, de sorte que son entraînement par le tourillon d'arbre de vilebrequin (1) soit empêché.

7. Arrangement d'un joint d'arbre selon l'une des revendications 1 à 5, caractérisé en ce que, lors de l'utilisation d'un joint d'arbre (5) exécuté en joint labyrinthe (5) des trous de recirculation (12) font la liasion entre les lamelles d'étanchéité et les trous radiaux (8).

Fig. 1

*Fig. 2*